# EUROPEAN PATENT SPECIFICATION

(11) **EP 3 287 747 B1**
(45) Date of publication and mention of the grant of the patent: **30.12.2020**
(21) Application number: 17162432.3
(22) Date of filing: 22.03.2017
(51) Int. Cl.: G01C 21/36, G05D 1/02, B62K 11/00, G06K 9/00, B62J 45/40

(54) **METHOD AND APPARATUS FOR CONTROLLING A BALANCE CAR**
VERFAHREN UND VORRICHTUNG ZUR STEUERUNG EINES GLEICHGEWICHTSWAGENS
PROCÉDÉ ET APPAREIL DE COMMANDE DE CHARIOT TENDEUR

(30) Priority: 23.08.2016 CN 201610710898
(43) Date of publication of application: 28.02.2018
(73) Proprietor: Beijing Xiaomi Mobile Software Co., Ltd., Beijing 100085 (CN)
(72) Inventor: CHEN, Shuai, BEIJING, 100085 (CN); LIU, Tiejun, BEIJING, 100085 (CN); ZHANG, Xiangyang, BEIJING, 100085 (CN)
(74) Representative: Cabinet Beau de Loménie

(56) References cited:
- EP-A2- 2 677 274
- CN-A- 105 223 952
- CN-A- 105 810 007
- US-A1- 2008 027 599
- US-B1- 9 081 385

## Description

### TECHNICAL FIELD

The present disclosure relates to the field of balance car technology and, particularly, to a method and an apparatus for controlling a balance car.

### BACKGROUND

Currently, more users are using a balance car instead of walk. However, driving the balance car is not allowable in some areas for the sake of safety, so a user may need to drag the balance car manually if he wants to move it to a place in these areas, which brings a great trouble to the user's operation and requires a lot of physical strength.

### SUMMARY

A method and an apparatus for controlling a balance car are provided as set out in the appended claims.

The invention is also directed to a computer program for executing the steps of the method of claim 1.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by the invention may achieve the following advantageous effects.

According to the technical solutions provided by the invention by detecting a navigation marker used for navigating the balance car, the balance car can be controlled intelligently to travel according to the navigation marker when the navigation marker is detected, without requiring a user to drive the balance car, so that an intelligent control to the balance car can be realized, the problem that the user needs to drag the balance car manually if he cannot drive the balance car can be avoided, and the user is greatly facilitated.

It should be understood that the above general description and the detailed description below are merely exemplary, and do not limit the present disclosure.

### BRIEF DESCRIPTION OF THE DRAWINGS

The accompanying drawings are incorporated in and constitute a part of this specification, illustrate embodiments conforming to the disclosure and together with the description serve to explain the principles of the disclosure.
FIG. 1 is a flowchart illustrating a method for controlling a balance car according to an exemplary embodiment.
FIG. 2 is a flowchart illustrating that a navigation marker used for navigating a balance car is detected according to an exemplary embodiment.
FIG. 3 is a flowchart illustrating that a navigation marker used for navigating a balance car is detected according to another exemplary embodiment.
FIG. 4 is a flowchart illustrating that a balance car is controlled to travel according to a navigation marker according to an exemplary embodiment.
FIG. 5 is a flowchart illustrating that a balance car is controlled to travel according to a navigation marker according to another exemplary embodiment.
FIG. 6 is a flowchart illustrating that a balance car is controlled to travel according to a navigation marker according to still another exemplary embodiment.
FIG. 7 is a block diagram illustrating an apparatus for controlling a balance car according to an exemplary embodiment.
FIG. 8 is a block diagram illustrating a detecting module according to an exemplary embodiment.
FIG. 9 is a block diagram illustrating a detecting module according to another exemplary embodiment.
FIG. 10 is a block diagram illustrating a controlling module according to an exemplary embodiment.
FIG. 11 is a block diagram illustrating a controlling module according to another exemplary embodiment.
FIG. 12 is a block diagram illustrating a controlling module according to still another exemplary embodiment.
FIG. 13 is a block diagram illustrating a controlling module according to still yet another exemplary embodiment.
FIG. 14 is a block diagram illustrating a controlling apparatus applied to a balance car according to an exemplary embodiment.

### DETAILED DESCRIPTION

Descriptions will now be made in detail to exemplary embodiments, examples of which are illustrated in the accompanying drawings. When accompanying figures are mentioned in the following descriptions, the same numbers in different drawings represent the same or similar elements, unless otherwise represented. The implementations set forth in the following description of exemplary embodiments do not represent all implementations consistent with the invention. Instead, they are merely examples of apparatus and methods consistent with aspects related to the disclosure as recited in the appended claims.

Currently, more users are using a balance car instead of walk. However, driving the balance car is not allowable in some areas for the sake of safety, so a user may need to drag the balance car manually if he wants to move it to a place in these areas, which brings a great trouble to the user's operation and requires a lot of physical strength.

In order to overcome those problems described above, embodiments of the present disclosure provide a method for controlling a balancer car. The method can be used in a procedure, a system or an apparatus for controlling the balancer car, while an execution body implementing the method may be a balancer car or a terminal connected with the balancer car.

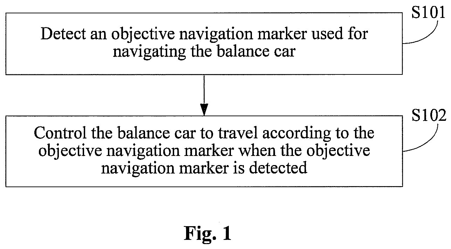

The invention provides a method for controlling a balance car. Referring to Fig. 1, Fig. 1 is a flowchart illustrating a method for controlling a balance car according to an exemplary embodiment.

As shown in Fig. 1, the method includes step S101 to step S102

In the step S101, a navigation marker (or navigation sign, or objective navigation marker) used for navigating the balance car is detected. In a particular example, the navigation marker detected in S101 may comprise a plurality of navigation markers.

The navigation marker includes one or more of a graphic navigation marker, an audio navigation marker, a video navigation marker and an infrared navigation marker, and is used to indicate at least one of a traveling direction and a traveling speed that the balancer car should comply with or take into account when navigating. A navigation marker can be used to obtain navigation instructions for the purpose of controlling navigation of the balance car, such as obtaining instructions related to traveling direction and/or traveling speed.

In the step S102, the balance car is controlled to travel according to the navigation marker when the navigation marker is detected.

By detecting a navigation marker used for navigating the balance car, the balance car can be controlled intelligently to travel according to the navigation marker when the navigation marker is detected, without requiring a user to drive the balance car, so that an intelligent control to the balance car can be realized, the problem that the user needs to drag the balance car manually if he cannot drive the balance car can be avoided, and the user is greatly facilitated.

The embodiment of the present disclosure provides a method for detecting a navigation marker used for navigating the balance car, which is a further subdivision and extension of the step S101 illustrated in Fig. 1.

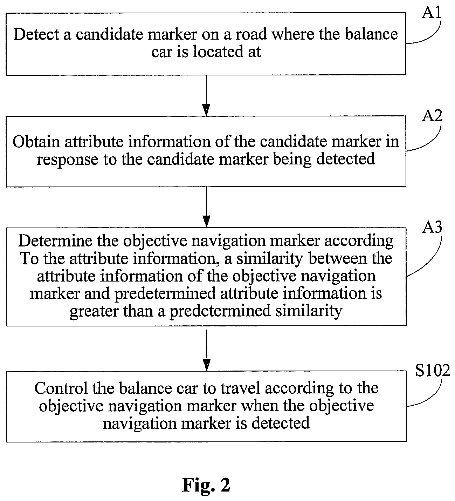

Referring to Fig. 2, Fig. 2 is a flowchart illustrating that a navigation marker used for navigating a balance car is detected according to an exemplary embodiment.

As shown in Fig. 2, the step S101 illustrated in Fig. 1 is implemented, that is, the navigation marker used for navigating the balance car is detected, through the following steps.

In step A1, a candidate marker on the road where the balance car is located is detected. By "candidate marker", it is meant a marker that may be potentially used as a navigation marker to control the balance car.

The candidate marker can be all kinds of markers (or signs or the like) drawn on the road that may represent the navigation marker, such as various lines and icons.

In step A2, attribute information of the candidate marker is obtained in response to the candidate marker being detected.

The attribute information is used to represent all kinds of attributes of candidate markers, such as set position, color, length and width.

In step A3, the navigation marker is determined according to the attribute information, a similarity between the attribute information of the navigation marker and predetermined attribute information is greater than a predetermined similarity. In an embodiment, the predetermined attribute information includes standard attribute information of the navigation marker that is previously preset.

Some interfering objects may be present on the road where the balance car is located, or multiple navigation markers with different attribute information can be provided on the road. Thus, the candidate marker on the road where the balance car is located can be detected first when the navigation marker is being detected. Required navigation marker can be determined from the candidate marker, after the candidate marker is detected.

For instance, detection of a yellow navigation marker is taken as an example. The candidate marker on the road where the balance car is located is detected. The attribute information of the candidate marker is obtained in response to the candidate marker being detected, that is, the color of the candidate marker is obtained. The color similarity between the color of the candidate marker and yellow is obtained, and then the candidate marker with color similarity greater than the predetermined similarity is obtained and determined as the navigation marker.

Moreover, if there are multiple candidate markers, the similarity between whose attribute information and the predetermined attribute information is greater than the predetermined similarity, the candidate marker whose attribute information has maximum similarity with the predetermined attribute information among the multiple candidate markers can be determined as the navigation marker.

The navigation marker includes at least one of a graphic navigation marker, an audio navigation marker, a video navigation marker and an infrared navigation marker.

The navigation marker may indicate at least one of a traveling direction and a traveling speed. A navigation marker may thus indicate or provide navigation instruction, such as traveling direction and/or traveling speed that the balance car is to comply with or take into account when navigating.

The navigation marker includes at least one of above described markers and, thus, is abundant in its types, so that the balance car can travel according to different types of navigation markers. Moreover, the navigation marker can indicate at least one of the traveling direction and the traveling speed, thus the balance car can be controlled intelligently to travel according to indicated traveling direction and indicated traveling speed, and the user is greatly facilitated.

Moreover, the traveling speed required by a navigation marker can be low to ensure driving safety. If the traveling speed is lower than or equal to the user's walking speed, the balance car can follow the user and travel automatically according to the navigation marker.

The embodiment of the present disclosure provides another method for detecting a navigation marker used for navigating the balance car, which is a further subdivision and extension of the step S101 illustrated in Fig. 1. In the method, the navigation marker includes a graphic navigation marker, and the balance car is provided with a camera, which can be installed on any place in the balance car, such as on the base of the balance car.

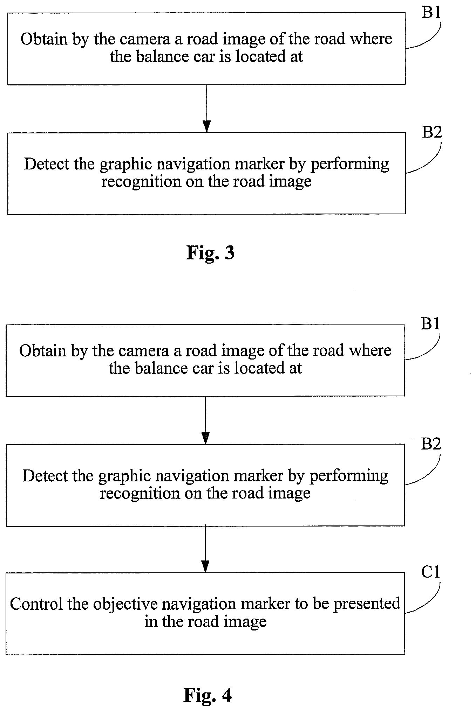

Referring to Fig. 3, Fig. 3 is a flowchart illustrating that a navigation marker used for navigating a balance car is detected according to another exemplary embodiment.

As shown in Fig. 3, the step S101 illustrated in Fig. 1 is implemented, that is, the navigation marker used for navigating the balance car is detected, through the following steps.

In step B1, a road image of the road where the balance car is located is obtained by the camera.

In step B2, the graphic navigation marker is detected by performing recognition on the road image.

If the navigation marker includes the graphic navigation marker and the balance car is provided with a camera, the road where the balance car is located can be shot by the camera to obtain the road image when the graphic navigation marker is obtained, and then the road image can be performed recognition, thus the graphic navigation marker on the road can be detected accurately.

Moreover, the balance car may be also provided with a lighting device such as a lamp. When the road image is obtained, the lighting device can be turned on if current ambient brightness is lower than a predetermined ambient brightness, so that the current ambient brightness can be higher than or equal to the predetermined ambient brightness. Thus the road image with high resolution and definition can still be shot under low ambient brightness, and it benefits that the road image can be performed recognition better so that the graphic navigation marker can be detected accurately.

In an embodiment, the graphic navigation marker includes at least one of a navigation icon on the road, a navigation icon on a signpost and a navigation icon on a building near the road.

The graphic navigation marker on the road where the balance car is located can be at least one of a navigation marker drawn on the road, a navigation marker on a signpost near the road (for example both sides of the road) and a navigation marker on a building near the road (for example on the wall of a building along the road). The graphic navigation can include a navigation line, a navigation guidance arrow, an icon, characters, and the like.

In an embodiment, the navigation marker includes a navigation icon on the road. The navigation icon on the road may be for instance a navigation line on the road.

The attribute information includes at least one of set position, color, length and width.

The navigation icon on the road can include a navigation line on the road and the attribute information can include at least one of set position, color, length and width, so that when the navigation marker is determined according to the attribute information, the similarity between the attribute information and the predetermined attribute information can be derived by determining whether the set position is within a preset position, whether the color of the candidate marker is same with a preset color, whether a continuous length of the candidate marker exceeds a preset length, or whether a width of the candidate marker exceeds a preset width, or the like. Then the navigation marker can be determined accurately according to the attribute information of the candidate marker.

The invention provides a method for controlling the balance car to travel according to a navigation marker, which is a further subdivision and extension of the step S102 illustrated in Fig. 1.

The step S102 illustrated in Fig. 1 is implemented, that is, the balance car is controlled to travel according to the navigation marker, through the following steps.

The balance car is controlled to travel according to the navigation line on the road, which can be navigation lines of various colors drawn in advance, such as white, black, red and the like.

When the balance car is controlled to travel according to the navigation marker, if the navigation marker includes a navigation line on the road, the balance car can be controlled intelligently to travel itself according to the navigation line on the road, so that the balance car can be navigated by the navigation line on the road.

Referring to Fig. 4, Fig. 4 is a flowchart illustrating that a balance car is controlled to travel according to a navigation marker according to an exemplary embodiment.

As shown in Fig. 4, in an embodiment, the step S102 illustrated in Fig. 1 is implemented, that is, the balance car is controlled to travel according to the navigation marker, through the following steps.

In step C1, the navigation marker is controlled so that it is kept present (positioned) in the road image.

The balance car can be controlled to travel according to the navigation marker such that the navigation marker is always present (is maintained) in the road image. Thus the balance car can be ensured to travel automatically without deviating from the navigation marker.

Moreover, when it is controlled such that the navigation marker is always present in the road image, it had better been controlled such that the navigation marker is always present (positioned) in the middle of the road image, thus the balance car can be sufficiently ensured to travel without deviating from the navigation marker

In an embodiment, if the navigation marker includes respectively an audio navigation marker, a video navigation marker and an infrared navigation marker, these navigation markers can be detected for the balance car via a signal sent by a device, which can be a device wired or wireless connected with the balance car and located any place. The device may interact with the balance car and send an audio signal including an audio navigation marker, a video signal including a video navigation marker or an infrared signal including an infrared navigation marker to the balance car, so that the audio navigation marker can be detected by performing recognition on the received audio signal, the video navigation marker can be detected by performing recognition on the received video signal, the infrared navigation marker can be detected by performing recognition on the received infrared signal, and then the balance car can travel according to the detected audio navigation marker, the detected video navigation marker, the detected infrared navigation marker. For instance, the device can be positioned on the road where the balance car is located, and send an infrared signal including an infrared navigation marker or an audio signal including an audio navigation marker to the balance car when the balance car is detected to be approaching, so that recognition can be performed on the infrared signal and audio signal by the balance car, then the infrared navigation marker or the audio navigation marker can be detected, and the balance car can travel according to the infrared navigation marker or the audio navigation marker.

To allow the user to learn about these markers, these makers can be output by means of audio, text or image.

In an embodiment, the graphic navigation marker can also be output by means of displaying an image on a device.

The embodiment of the present disclosure provides another method for controlling the balance car to travel according to a navigation marker, which is a further subdivision and extension of the step S102 illustrated in Fig. 1.

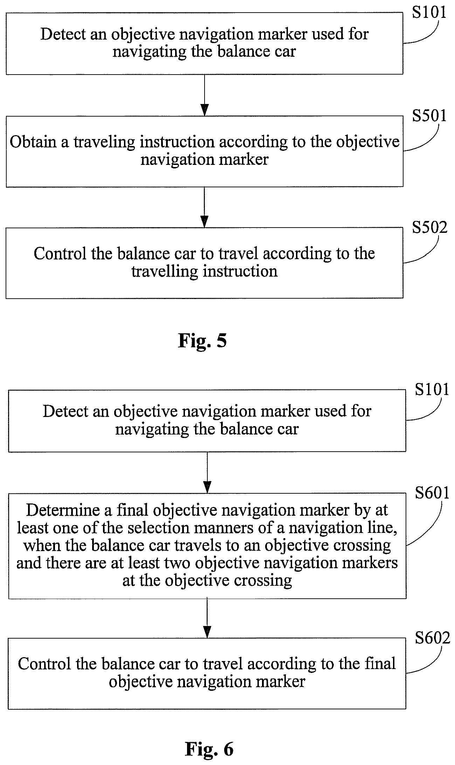

Referring to Fig. 5, Fig. 5 is a flowchart illustrating that a balance car is controlled to travel according to a navigation marker according to another exemplary embodiment.

As shown in Fig. 5, the step S102 illustrated in Fig. 1 is implemented, that is, the balance car is controlled to travel according to the navigation marker, through the following steps.

In step 501, a travelling instruction is obtained according to the navigation marker.

In step 502, the balance car is controlled to travel according to the travelling instruction, which is used to indicate at least one of a traveling direction and a traveling speed of the balancer car.

When the balance car is controlled to travel according to the navigation marker, a travelling instruction can be obtained according to the navigation marker, and then the balance car can be controlled intelligently to travel automatically according to the travelling instruction.

In an embodiment, a detailed process for obtaining the travelling instruction is described as follows.

When the navigation marker includes a graphic navigation marker, the travelling instruction can be obtained by performing graph recognition on the graphic navigation marker. For instance, the travelling direction can be obtained by performing recognition on the direction where a guidance arrow in the graphic navigation marker is pointed to, and the travelling speed can be obtained by performing recognition on a speed limit sign in the graphic navigation marker.

When the navigation marker includes an audio navigation marker, the travelling instruction can be obtained by performing audio recognition on the audio navigation marker. For instance, the travelling direction can be obtained by performing recognition on voice information (for example, the voice information indicative of turning left or turning right) used to indicate a direction in the audio navigation marker by means of voice recognition technology in related art, and the travelling speed can be obtained by performing recognition on voice information (for example, a top speed of the balance car is XX meter per second) used to indicate speed in the audio navigation marker by means of voice recognition technology in related art.

When the navigation marker includes a video navigation marker, the travelling instruction can be obtained by performing audio recognition or graph recognition on the video navigation marker. For instance, the travelling direction can be obtained by performing recognition on voice information or image (for example, characters including a indicated direction or an image including a guidance arrow) used to indicate a direction in the video navigation marker, and the travelling speed can be obtained by performing recognition on voice information or image (for example, an image including speed) used to indicate a speed in the video navigation marker.

When the navigation marker includes an infrared navigation marker, the travelling instruction can be obtained by performing infrared recognition on the infrared navigation marker. For instance, the travelling direction can be obtained by performing recognition on infrared signals used to indicate a direction in the infrared navigation marker, and the travelling speed can be obtained by performing recognition on infrared signals used to indicate speed in the infrared navigation marker.

The embodiment of the present disclosure provides another method for controlling the balance car to travel according to a navigation marker, which is a further subdivision and extension of the step S102 illustrated in Fig. 1.

Referring to Fig. 6, Fig. 6 is a flowchart illustrating that a balance car is controlled to travel according to a navigation marker according to still another exemplary embodiment.

As shown in Fig. 6, the step S102 illustrated in Fig. 1 is implemented, that is, the balance car is controlled to travel according to the navigation marker when the navigation marker is detected, through the following steps.

In step S601, when the balance car travels to a crossing and there are at least two navigation markers at the crossing, a final navigation marker can be determined by at least one of the following selection manners of a navigation line. Herein, the crossing can be any crossing on the road where the balance car is located.

In step S602, the balance car is controlled to travel according to the final navigation marker.

The selection of the navigation line include following manners.

The final navigation marker can be determined according to a preset travelling direction corresponding to the crossing, which may be a travelling direction that is preset according to a travelling destination of the balance car.

When there are multiple navigation markers at the crossing, in order that the final navigation marker can be determined accurately, according to the travelling direction corresponding to the crossing, the navigation marker indicating the travelling direction can be determined as the final navigation marker. Then the balance car can be controlled to travel automatically according to the navigation marker including this travelling direction.

Alternatively, a selection instruction of travelling direction is received, and the final navigation marker is determined according to the selection instruction of travelling direction.

When there are multiple navigation markers at the crossing, the navigation marker that the user expects (that is, the navigation marker selected according to the selection instruction of travelling direction) can be selected as the final navigation marker according to the selection instruction of travelling direction. Then, the balance car can be navigated by the navigation marker selected by the selection instruction of travelling direction, and travel automatically according to the travelling direction and travelling speed that the user expects.

Alternatively, it is determined that whether there is a prestored historic selected record of a navigation line corresponding to the crossing.

When there is a prestored historic selected record of a navigation line, the final navigation marker can be determined according to the historic selected record of the navigation line.

When there are multiple navigation markers at the crossing, in order that the final navigation marker can be determined accurately, it is determined that whether there is a prestored historic selected record of a navigation line corresponding to the crossing. If yes, according to the historic selected record of a navigation line, the historic navigation marker which is used most frequently, used greatest number of times or most recently used can be determined as the final navigation marker. Then the balance car can be controlled to travel automatically according to the most commonly used navigation marker or the most recently used navigation marker.

Moreover, the above embodiments can be implemented individually or in combination.

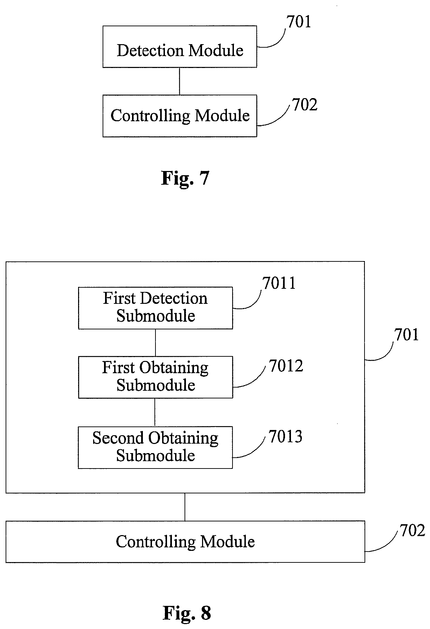

Corresponding to the methods for controlling a balance car disclosed in the above described embodiments, the present disclosure also provides an apparatus for controlling a balance car. Referring to Fig. 7, Fig. 7 is a block diagram illustrating an apparatus for controlling a balance car according to an exemplary embodiment.

As shown in Fig. 7, the apparatus includes:
a detection module 701 configured to detect a navigation marker used for navigating the balance car; and
a controlling module 702 configured to control the balance car to travel according to the navigation marker when the navigation marker is detected by the detection module 701.

The present disclosure provides a detection module which is a further subdivision and extension of the detection module illustrated in Fig. 7.

Referring to Fig. 8, Fig. 8 is a block diagram illustrating a detecting module according to an exemplary embodiment.

As shown in Fig. 8, the detection module 701 includes:
a first detection sub-module 7011 configured to detect a candidate marker on a road where the balance car is located;
a first obtaining sub-module 7012 configured to obtain attribute information of the candidate marker in response to the candidate marker being detected by the first detection sub-module 7011; and
a second obtaining sub-module 7013 configured to obtain the navigation marker according to the attribute information obtained by the first obtaining sub-module 7012, wherein a similarity between the attribute information of the navigation marker and predetermined attribute information is greater than a predetermined similarity.

In an embodiment, the navigation marker includes at least one of a graphic navigation marker, an audio navigation marker, a video navigation marker and an infrared navigation marker.

The navigation marker may indicate at least one of a traveling direction and a traveling speed.

The present disclosure provides another detection module which is a further subdivision and extension of the detection module illustrated in Fig. 7.

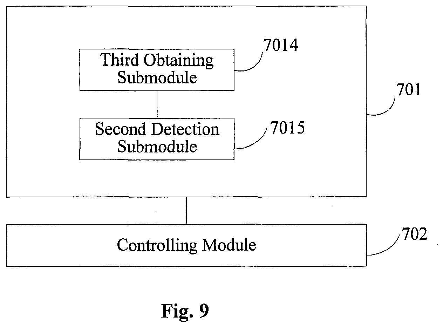

Referring to Fig. 9, Fig. 9 is a block diagram illustrating another detecting module according to an exemplary embodiment.

As shown in Fig. 9, the navigation marker includes the graphic navigation marker, and the balance car is provided with a camera.

The detection module 701 illustrated Fig. 7 includes:
a third obtaining sub-module 7014 configured to obtain by the camera a road image of the road where the balance car is located; and
a second detection sub-module 7015 configured to detect the graphic navigation marker by performing recognition on the road image obtained by the third obtaining sub-module 7014.

In an embodiment, the graphic navigation marker may include at least one of a navigation icon on the road, a navigation icon on a signpost and a navigation icon on a building near the road.

In an embodiment, the navigation marker may include at least one of a navigation icon on a road, the navigation icon on the road includes a navigation line on the road.

The attribute information may include at least one of set position, color, length and width.

The present disclosure provides a controlling module which is a further subdivision and extension of the controlling module illustrated in Fig. 9.

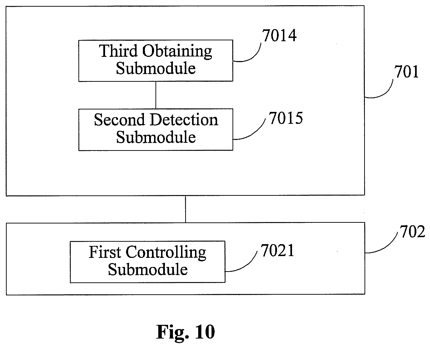

Referring to Fig. 10, Fig. 10 is a block diagram illustrating a controlling module according to an exemplary embodiment.

As shown in Fig. 10, the controlling module illustrated 702 in Fig. 9 includes:
a first controlling sub-module 7021 configured to control the balance car to travel along the navigation line on the road.

The present disclosure provides another controlling module which is a further subdivision and extension of the controlling module illustrated in Fig. 9.

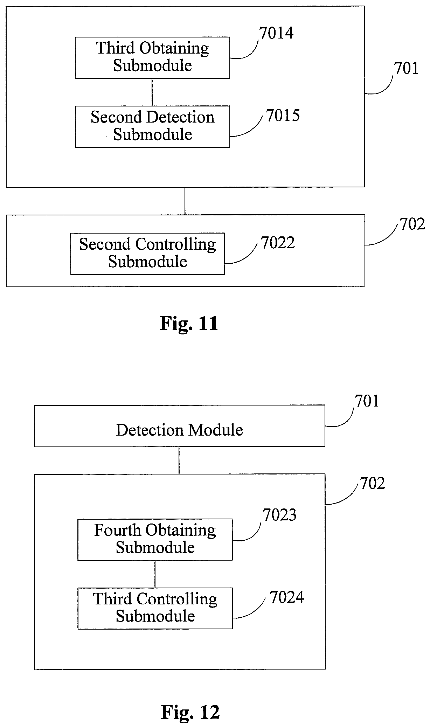

Referring to Fig. 11, Fig. 11 is a block diagram illustrating another controlling module according to an exemplary embodiment.

As shown in Fig. 11, the controlling module illustrated 702 in Fig. 9 includes:
a second controlling sub-module 7022 configured to control the navigation marker to be present in the road image obtained by the third obtaining sub-module.

The present disclosure provides another controlling module which is a further subdivision and extension of the controlling module illustrated in Fig. 9.

Referring to Fig. 12, Fig. 12 is a block diagram illustrating still another controlling module according to an exemplary embodiment.

As shown in Fig. 12, the controlling module illustrated 702 in Fig. 9 includes:
a fourth obtaining sub-module 7023 configured to obtain a travelling instruction according to the navigation marker detected by the detection module; and
a third controlling sub-module 7024 configured to control the balance car to travel according to the travelling instruction obtained by the fourth obtaining sub-module 7023.

The present disclosure provides another controlling module which is a further subdivision and extension of the controlling module illustrated in Fig. 9.

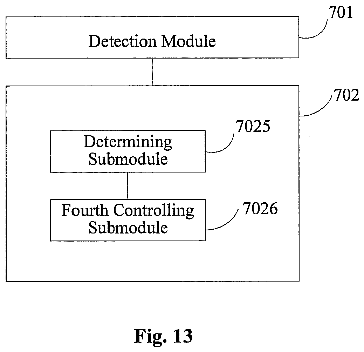

Referring to Fig. 13, Fig. 13 is a block diagram illustrating yet still another controlling module according to an exemplary embodiment.

As shown in Fig. 13, the controlling module 702 illustrated in Fig. 9 includes:
a determination sub-module 7025 configured to determine the final navigation marker by at least one of the following selection manners of a navigation line when the balance car travels to a crossing and there are at least two navigation markers at the crossing; and
a fourth controlling sub-module 7026 configured to control the balance car to travel according to the final navigation marker determined by the determination sub-module 7025.

The selection of the navigation line may include following manners.

The final navigation marker may be determined according to a preset travelling direction corresponding to the crossing.

Alternatively, a selection instruction of travelling direction may be received, and the final navigation marker can be determined according to the selection instruction of travelling direction.

Alternatively, it is determined that whether there is a prestored historic selected record of a navigation line. When there is a prestored historic selected record of a navigation line, the final navigation marker can be determined according to the historic selected record of the navigation line.

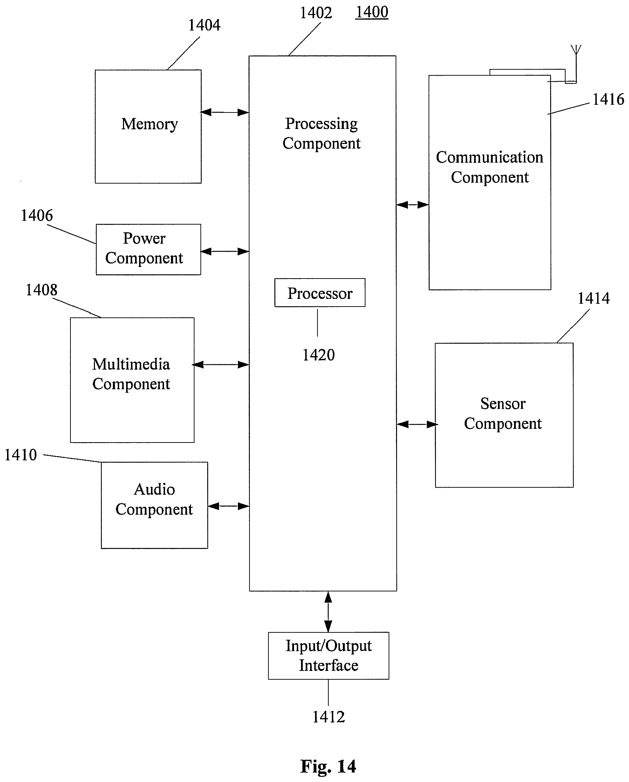

Fig. 14 is a block diagram showing an apparatus 1400 for controlling a balance car according to an exemplary embodiment, which can be used in a terminal equipment. For example, the apparatus 1400 may be a mobile phone, a computer, a digital broadcast terminal, a message transceiver device, a game console, a tablet device, a medical equipment, a fitness equipment, a personal digital assistant, and the like.

Referring to Fig. 1400, the apparatus 1400 may include one or more of the following components: a processing component 1402, a memory 1404, a power component 1406, a multimedia component 1408, an audio component 1410, an input/output (I/O) interface 1412, a sensor component 1414, and a communication component 1416.

The processing component 1402 typically controls overall operations of the apparatus 1400, such as the operations associated with display, telephone calls, data communications, camera operations, and recording operations. The processing component 1402 may include one or more processors 1420 to execute instructions to perform all or part of the steps in the above described methods. Moreover, the processing component 1402 may include one or at least two modules which facilitate the interaction between the processing component 1402 and other components. For instance, the processing component 1402 may include a multimedia module to facilitate the interaction between the multimedia component 1408 and the processing component 1402.

The memory 1404 is configured to store various types of data to support the operation of the apparatus 1400. Examples of such data include instructions for any applications or methods operated on the apparatus 1400, contact data, phonebook data, messages, pictures, video, etc. The memory 1404 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1406 provides power to various components of the apparatus 1400. The power component 1406 may include a power management system, one or at least two power sources, and any other components associated with the generation, management, and distribution of power in the apparatus 1400.

The multimedia component 1408 includes a screen providing an output interface between the apparatus 1400 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, slips, and gestures on the touch panel. The touch sensors may not only sense a boundary of a touch or slip action, but also sense a period of time and a pressure associated with the touch or slip action. In some embodiments, the multimedia component 1408 includes a front camera and/or a rear camera. The front camera and the rear camera may receive an external multimedia datum while the apparatus 1400 is in an operation mode, such as a photographing mode or a video mode. Each of the front camera and the rear camera may be a fixed optical lens system or have focus and optical zoom capability.

The audio component 1410 is configured to output and/or input audio signals. For example, the audio component 1410 includes a microphone ("MIC") configured to receive an external audio signal when the apparatus 1400 is in an operation mode, such as a call mode, a recording mode, and a voice recognition mode. The received audio signal may be further stored in the memory 1404 or transmitted via the communication component 1416. In some embodiments, the audio component 1410 further includes a speaker to output audio signals.

The I/O interface 1412 provides an interface between the processing component 802 and peripheral interface modules, such as a keyboard, a click wheel, buttons, and the like. The buttons may include, but are not limited to, a home button, a volume button, a starting button, and a locking button.

The sensor component 1414 includes one or at least two sensors to provide status assessments of various aspects of the apparatus 1400. For instance, the sensor component 1414 may detect an open/closed status of the apparatus 1400, relative positioning of components, e.g., the display and the keypad, of the apparatus 1400, a change in position of the apparatus 1400 or a component of the apparatus 1400, a presence or absence of user contact with the apparatus 1400, an orientation or an acceleration/deceleration of the apparatus 1400, and a change in temperature of the apparatus 1400. The sensor component 1414 may include a proximity sensor configured to detect the presence of nearby objects without any physical contact. The sensor component 1414 may also include a light sensor, such as a CMOS or CCD image sensor, for use in imaging applications. In some embodiments, the sensor component 1414 may also include an accelerometer sensor, a gyroscope sensor, a magnetic sensor, a pressure sensor, or a temperature sensor.

The communication component 1416 is configured to facilitate communication, wired or wirelessly, between the apparatus 1400 and other devices. The apparatus 1400 can access a wireless network based on a communication standard, such as WiFi, 2G, or 3G, or a combination thereof. In one exemplary embodiment, the communication component 1416 receives a broadcast signal or broadcast associated information from an external broadcast management system via a broadcast channel. In one exemplary embodiment, the communication component 1416 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the apparatus 1400 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1404, executable by the processor 1420 in the apparatus 1400, for performing the above-described methods. For example, the non-transitory computer-readable storage medium may be a ROM, a RAM, a CD-ROM, a magnetic tape, a floppy disc, an optical data storage device, and the like.

## Claims

1. A method implemented by an apparatus for controlling a balance car that can be driven by a user, comprising:
detecting (S101) a navigation marker used for navigating the balance car; and
controlling (S102) the balance car to travel according to the navigation marker when the navigation marker is detected;
wherein said detecting a navigation marker used for navigating the balance car comprises:
detecting (A1) a candidate marker on a road where the balance car is located;
obtaining (A2) attribute information of the candidate marker in response to the candidate marker being detected; and
determining (A3) the navigation marker according to the attribute information, wherein a similarity between the attribute information of the navigation marker and predetermined attribute information is greater than a predetermined similarity;
wherein the navigation marker comprises at least one of a graphic navigation marker, an audio navigation marker, a video navigation marker and an infrared navigation marker; and
wherein the navigation marker indicates at least one of a traveling direction and a traveling speed;
wherein said traveling speed of the balance car is lower than or equal to a user's walking speed, causing the balance car to follow the user and travel automatically according to the navigation marker, without requiring the user to drive the balance car.

2. The method according to claim 1, **characterized in that** the navigation marker comprises the graphic navigation marker, the balance car being provided with a camera; and
wherein the detecting a navigation marker used for navigating the balance car comprises:
obtaining (B1) by the camera a road image of the road where the balance car is located; and
detecting (B2) the graphic navigation marker by performing recognition on the road image.

3. The method according to claim 2, **characterized in that** the graphic navigation marker comprises at least one of a navigation icon on the road, a navigation icon on a signpost and a navigation icon on a building near the road;
wherein the navigation marker comprises the navigation icon on the road, said navigation icon on the road comprising a navigation line on the road; and
wherein the attribute information comprises at least one of set position, color, length and width.

4. The method according to claim 3, **characterized in that** the controlling the balance car to travel according to the navigation marker comprises:
controlling the balance car to travel along the navigation line on the road.

5. The method according to any one of claims 2 to 4, **characterized in that** the controlling the balance car to travel according to the navigation marker comprises:
controlling (C1) the navigation marker to be present in the road image.

6. The method according to any one of claims 1 to 5, **characterized in that** the controlling the balance car to travel according to the navigation marker comprises:
obtaining (S501) a travelling instruction according to the navigation marker; and
controlling (S502) the balance car to travel according to the travelling instruction.

7. An apparatus for controlling a balance car that can be driven by a user, comprising:
a detection module (701) configured to detect a navigation marker used for navigating the balance car; and
a controlling module (702) configured to control the balance car to travel according to the navigation marker when the navigation marker is detected by the detection module;
wherein the detection module comprises:
a first detection sub-module (7011) configured to detect a candidate marker on a road where the balance car is located;
a first obtaining sub-module (7012) configured to obtain attribute information of the candidate marker in response to the candidate marker being detected by the first detection sub-module; and
a second obtaining sub-module (7013) configured to obtain a navigation marker according to the attribute information obtained by the first obtaining sub-module, wherein a similarity between the attribute information of the navigation marker and predetermined attribute information is greater than a predetermined similarity;
wherein the navigation marker comprises at least one of a graphic navigation marker, an audio navigation marker, a video navigation marker and an infrared navigation marker; and
wherein the navigation marker indicates at least one of a traveling direction and a traveling speed;
wherein said traveling speed of the balance car is lower than or equal to a user's walking speed, causing the balance car to follow the user and travel automatically according to the navigation marker, without requiring the user to drive the balance car.

8. The apparatus according to claim 7, **characterized in that** the navigation marker comprises the graphic navigation marker, the balance car being provided with a camera; and
wherein the detection module comprises:
a third obtaining sub-module (7014) configured to obtain by the camera a road image of the road where the balance car is located; and
a second detection sub-module (7015) configured to detect the graphic navigation marker by performing recognition on the road image obtained by the third obtaining sub-module.

9. The apparatus according to claim 8, **characterized in that** the graphic navigation marker comprises at least one of a navigation icon on the road, a navigation icon on a signpost and a navigation icon on a building near the road;
wherein the navigation marker comprises the navigation icon on the road, said navigation icon on the road comprising a navigation line on the road; and
wherein the attribute information comprises at least one of set position, color, length and width.

10. The apparatus according to claim 9, **characterized in that** the controlling module comprises:
a first controlling sub-module (7021) configured to control the balance car to travel along the navigation line on the road.

11. The apparatus according to any one of claims 8 to 10, **characterized in that** the controlling module comprises:
a second controlling sub-module (7022) configured to control the navigation marker to be present in the road image obtained by the third obtaining sub-module.

12. The apparatus according to any one of claims 7 to 11, **characterized in that** the controlling module comprises:
a fourth obtaining sub-module (7023) configured to obtain a travelling instruction according to the navigation marker detected by the detection module; and
a third controlling sub-module (7024) configured to control the balance car to travel according to the travelling instruction obtained by the fourth obtaining sub-module.

13. A computer program, which when executing on a processor, performs a method according to any one of claims 1 to 6.

## Patentansprüche

1. Verfahren, das von einer Vorrichtung zum Steuern eines Balancefahrzeugs, das von einem Benutzer gefahren werden kann, implementiert ist, umfassend:
Erfassen (S101) einer Navigationsmarkierung, die zum Navigieren des Balancefahrzeugs verwendet wird, und
Steuern (5102) des Balancefahrzeugs derart, dass es gemäß der Navigationsmarkierung fährt, wenn die Navigationsmarkierung erfasst ist,
wobei das Erfassen einer Navigationsmarkierung, die zum Navigieren des Balancefahrzeugs verwendet wird, umfasst:
Erfassen (A1) einer potentiellen Markierung auf einer Straße, auf der sich das Balancefahrzeug befindet,
Erhalten (A2) von Attributinformationen der potentiellen Markierung in Reaktion auf das Erfassen der potentiellen Markierung und
Bestimmen (A3) der Navigationsmarkierung gemäß den Attributinformationen, wobei eine Ähnlichkeit zwischen den Attributinformationen der Navigationsmarkierung und vorbestimmten Attributinformationen größer als eine vorbestimmte Ähnlichkeit ist,
wobei die Navigationsmarkierung wenigstens eine von einer graphischen Navigationsmarkierung, einer Audionavigationsmarkierung, einer Videonavigationsmarkierung und/oder einer Infrarotnavigationsmarkierung umfasst und
wobei die Navigationsmarkierung wenigstens eine von einer Fahrtrichtung und einer Fahrtgeschwindigkeit angibt,
wobei die Fahrgeschwindigkeit des Balancefahrzeug niedriger oder gleich der Gehgeschwindigkeit eines Benutzers ist, was wodurch das Balancefahrzeug dem Benutzer folgt und automatisch gemäß der Navigationsmarkierung fährt, ohne dass der Benutzer das Balancefahrzeug fahren muss.

2. Verfahren nach Anspruch 1, **dadurch gekennzeichnet, dass** die Navigationsmarkierung die graphische Navigationsmarkierung umfasst, wobei das Balancefahrzeug mit einer Kamera versehen ist, und
wobei das Erfassen einer Navigationsmarkierung, die zum Navigieren des Balancefahrzeugs verwendet wird, umfasst:
Erhalten (B1) eines Straßenbildes der Straße, auf der sich das Balancefahrzeug befindet, durch die Kamera, und
Erfassen (B2) der grafischen Navigationsmarkierung durch Ausführen einer Erkennung auf dem Straßenbild.

3. Verfahren nach Anspruch 2, **dadurch gekennzeichnet, dass** die graphische Navigationsmarkierung wenigstens eines von einem Navigationssymbol auf der Straße, einem Navigationssymbol auf einem Wegweiser und einem Navigationssymbol an einem Gebäude in der Nähe der Straße umfasst,
wobei die Navigationsmarkierung das Navigationssymbol auf der Straße umfasst, wobei das Navigationssymbol auf der Straße eine Navigationslinie auf der Straße umfasst, und
wobei die Attributinformation wenigstens eines von gesetzter Position, Farbe, Länge und Breite umfasst.

4. Verfahren nach Anspruch 3, **dadurch gekennzeichnet, dass** das Steuern des Balancefahrzeugs zum Fahren gemäß der Navigationsmarkierung umfasst:
Steuern des Balancefahrzeugs, um entlang der Navigationslinie auf der Straße zu fahren.

5. Verfahren nach einem der Ansprüche 2 bis 4, **dadurch gekennzeichnet, dass** das Steuern des Balancefahrzeugs zum Fahren gemäß der Navigationsmarkierung umfasst:
Steuern (C1) der Navigationsmarkierung so, dass sie im Straßenbild vorhanden ist.

6. Verfahren nach einem der Ansprüche 1 bis 5, **dadurch gekennzeichnet, dass** das Steuern des Balancefahrzeugs zum Fahren gemäß der Navigationsmarkierung umfasst:
Erhalten (S501) einer Fahranweisung gemäß der Navigationsmarkierung und
Steuern (S502) des Balancefahrzeugs zum Fahren gemäß der Fahranweisung.

7. Vorrichtung zum Steuern eines Balancefahrzeugs, das von einem Benutzer gefahren werden kann, umfassend:
ein Erfassungsmodul (701), das dazu konfiguriert ist, eine Navigationsmarkierung zu erfassen, die zum Navigieren des Balancefahrzeugs verwendet wird, und
ein Steuermodul (702), das dazu konfiguriert ist, das Balancefahrzeug so zu steuern, dass es gemäß der Navigationsmarkierung fährt, wenn die Navigationsmarkierung von dem Erfassungsmodul erfasst ist,
wobei das Erfassungsmodul umfasst:
ein erstes Erfassungs-Untermodul (7011), das dazu konfiguriert ist, eine potentielle Markierung auf einer Straße zu erfassen, auf der sich das Balancefahrzeug befindet,
ein erstes Erhaltungs-Untermodul (7012), das dazu konfiguriert ist, Attributinformationen der potentiellen Markierung als Reaktion darauf zu erhalten, dass die potentielle Markierung durch das erste Erfassungs-Untermodul erfasst wird, und
ein zweites Erhaltungs-Untermodul (7013), das dazu konfiguriert ist, eine Navigationsmarkierung gemäß der durch das erste erhaltende Untermodul erhaltenen Attributinformation zu erhalten, wobei eine Ähnlichkeit zwischen der Attributinformation der Navigationsmarkierung und einer vorbestimmten Attributinformation größer als eine vorbestimmte Ähnlichkeit ist,
wobei die Navigationsmarkierung wenigstens eine von einer graphischen Navigationsmarkierung, einer Audio-Navigationsmarkierung, einer VideoNavigationsmarkierung und einer Infrarot-Navigationsmarkierung umfasst und
wobei die Navigationsmarkierung wenigstens eine von einer Fahrtrichtung und einer Fahrgeschwindigkeit angibt,
wobei die Fahrgeschwindigkeit des Balancefahrzeugs geringer oder gleich der Gehgeschwindigkeit eines Benutzers ist, wodurch das Balancefahrzeug dem Benutzer folgt und automatisch gemäß der Navigationsmarkierung fährt, ohne dass der Benutzer das Balancefahrzeug fahren muss.

8. Vorrichtung nach Anspruch 7, **dadurch gekennzeichnet, dass** die Navigationsmarkierung die graphische Navigationsmarkierung umfasst, wobei das Balancefahrzeug mit einer Kamera versehen ist, und 1
wobei das Erfassungsmodul umfasst:
ein drittes Erhaltungs-Untermodul (7014), das dazu konfiguriert ist, durch die Kamera ein Straßenbild der Straße, auf der sich das Balancefahrzeug befindet, zu erhalten, und
ein zweites Erfassungs-Untermodul (7015), das dazu konfiguriert ist, die graphische Navigationsmarkierung zu erfassen, indem es eine Erkennung auf dem durch das dritte Erhaltungs-Untermodul erhaltenen Straßenbild durchführt.

9. Vorrichtung nach Anspruch 8, **dadurch gekennzeichnet, dass** die graphische Navigationsmarkierung wenigstens eines von einem Navigationssymbol auf der Straße, einem Navigationssymbol auf einem Wegweiser und einem Navigationssymbol an einem Gebäude in der Nähe der Straße umfasst,
wobei die Navigationsmarkierung das Navigationssymbol auf der Straße umfasst, wobei das Navigationssymbol auf der Straße eine Navigationslinie auf der Straße umfasst, und
wobei die Attributinformation wenigstens eines von gesetzter Position, Farbe, Länge und Breite umfasst.

10. Vorrichtung nach Anspruch 9, **dadurch gekennzeichnet, dass** das Steuermodul umfasst:
ein erstes Steuer-Untermodul (7021), das dazu konfiguriert ist, das Balancefahrzeug zu steuern, um entlang der Navigationslinie auf der Straße zu fahren.

11. Vorrichtung nach einem der Ansprüche 8 bis 10, **dadurch gekennzeichnet, dass** das Steuermodul umfasst:
ein zweites Steuer-Untermodul (7022), das dazu konfiguriert ist, die Navigationsmarkierung so zu steuern, dass sie in dem durch das dritte Erhaltungs-Untermodul erhaltenen Straßenbild vorhanden ist.

12. Vorrichtung gemäß einem der Ansprüche 7 bis 11, **dadurch gekennzeichnet, dass** das Steuermodul umfasst:
ein viertes Erhaltungs-Untermodul (7023), das dazu konfiguriert ist, eine Fahranweisung gemäß der von dem Erfassungsmodul erfassten Navigationsmarkierung zu erhalten, und
ein drittes Steuer-Untermodul (7024), das dazu konfiguriert ist, das Balancefahrzeug so zu steuern, dass es gemäß der durch das vierte Erhaltungs-Untermodul erhaltenen Fahranweisung fährt.

13. Computerprogramm, das bei der Ausführung auf einem Prozessor ein Verfahren nach einem der Ansprüche 1 bis 6 ausführt.

## Revendications

1. Procédé mis en œuvre par un appareil permettant de commander un véhicule gyroscopique qui peut être conduit par un utilisateur, comprenant les étapes suivantes :
détecter (S101) un repère de navigation utilisé pour la navigation du véhicule gyroscopique ; et
commander (S102) le véhicule gyroscopique pour qu'il se déplace en fonction du repère de navigation lorsque le repère de navigation est détecté ;
dans lequel ladite détection d'un repère de navigation utilisé pour la navigation du véhicule gyroscopique comprend les étapes suivantes :
détecter (A1) un repère candidat sur une route où se trouve le véhicule gyroscopique ;
obtenir (A2) des informations d'attributs du repère candidat en réponse à la détection du repère candidat ; et
déterminer (A3) le repère de navigation en fonction des informations d'attributs, dans lequel une similitude entre les informations d'attributs du repère de navigation et des informations d'attributs prédéterminées est supérieure à une similitude prédéterminée ;
dans lequel le repère de navigation comprend un repère de navigation graphique et/ou un repère de navigation audio et/ou un repère de navigation vidéo et/ou un repère de navigation infrarouge ; et
dans lequel le repère de navigation indique une direction de déplacement et/ou une vitesse de déplacement ;
dans lequel ladite vitesse de déplacement du véhicule gyroscopique est inférieure ou égale à une vitesse de marche d'un utilisateur, d'où il résulte que le véhicule gyroscopique suit l'utilisateur et se déplace automatiquement en fonction du repère de navigation, sans nécessiter que l'utilisateur conduise le véhicule gyroscopique.

2. Procédé selon la revendication 1, **caractérisé en ce que** le repère de navigation comprend le repère de navigation graphique, le véhicule gyroscopique étant pourvu d'un appareil de prise de vues ; et
dans lequel la détection d'un repère de navigation utilisé pour la navigation du véhicule gyroscopique comprend les étapes suivantes :
obtenir (B1) au moyen de l'appareil de prise de vues une image de route de la route où se trouve le véhicule gyroscopique ; et
détecter (B2) le repère de navigation graphique en effectuant une reconnaissance sur l'image de route.

3. Procédé selon la revendication 2, **caractérisé en ce que** le repère de navigation graphique comprend une icône de navigation sur la route et/ou une icône de navigation sur un poteau indicateur et/ou une icône de navigation sur un bâtiment à proximité de la route ;
dans lequel le repère de navigation comprend l'icône de navigation sur la route, ladite icône de navigation sur la route comprenant une ligne de navigation sur la route ; et
dans lequel les informations d'attributs comprennent une position établie et/ou une couleur et/ou une longueur et/ou une largeur.

4. Procédé selon la revendication 3, **caractérisé en ce que** la commande du véhicule gyroscopique pour qu'il se déplace en fonction du repère de navigation comprend l'étape suivante :
commander le véhicule gyroscopique pour qu'il se déplace le long de la ligne de navigation sur la route.

5. Procédé selon l'une quelconque des revendications 2 à 4, **caractérisé en ce que** la commande du véhicule gyroscopique pour qu'il se déplace en fonction du repère de navigation comprend l'étape suivante :
commander (C1) le repère de navigation pour qu'il soit présent sur l'image de route.

6. Procédé selon l'une quelconque des revendications 1 à 5, **caractérisé en ce que** la commande du véhicule gyroscopique pour qu'il se déplace en fonction du repère de navigation comprend les étapes suivantes :
obtenir (S501) une instruction de déplacement en fonction du repère de navigation ; et
commander (S502) le véhicule gyroscopique pour qu'il se déplace en fonction de l'instruction de déplacement.

7. Appareil permettant de commander un véhicule gyroscopique qui peut être conduit par un utilisateur, comprenant :
un module de détection (701) conçu pour détecter un repère de navigation utilisé pour la navigation du véhicule gyroscopique ; et
un module de commande (702) conçu pour commander le véhicule gyroscopique afin qu'il se déplace en fonction du repère de navigation lorsque le repère de navigation est détecté par le module de détection ;
dans lequel le module de détection comprend :
un premier sous-module de détection (7011) conçu pour détecter un repère candidat sur une route où se trouve le véhicule gyroscopique ;
un premier sous-module d'obtention (7012) conçu pour obtenir des informations d'attributs du repère candidat en réponse à la détection du repère candidat par le premier sous-module de détection ; et
un deuxième sous-module d'obtention (7013) conçu pour obtenir un repère de navigation en fonction des informations d'attributs obtenues par le premier sous-module d'obtention, dans lequel une similitude entre les informations d'attributs du repère de navigation et des informations d'attributs prédéterminées est supérieure à une similitude prédéterminée ;
dans lequel le repère de navigation comprend un repère de navigation graphique et/ou un repère de navigation audio et/ou un repère de navigation vidéo et/ou un repère de navigation infrarouge ; et
dans lequel le repère de navigation indique une direction de déplacement et/ou une vitesse de déplacement ;
dans lequel ladite vitesse de déplacement du véhicule gyroscopique est inférieure ou égale à une vitesse de marche d'un utilisateur, d'où il résulte que le véhicule gyroscopique suit l'utilisateur et se déplace automatiquement en fonction du repère de navigation, sans nécessiter que l'utilisateur conduise le véhicule gyroscopique.

8. Appareil selon la revendication 7, **caractérisé en ce que** le repère de navigation comprend le repère de navigation graphique, le véhicule gyroscopique étant pourvu d'un appareil de prise de vues ; et
dans lequel le module de détection comprend :
un troisième sous-module d'obtention (7014) conçu pour obtenir, au moyen de l'appareil de prise de vues, une image de route de la route où se trouve le véhicule gyroscopique ; et
un second sous-module de détection (7015) conçu pour détecter le repère de navigation graphique en effectuant une reconnaissance sur l'image de route obtenue par le troisième sous-module d'obtention.

9. Appareil selon la revendication 8, **caractérisé en ce que** le repère de navigation graphique comprend une icône de navigation sur la route et/ou une icône de navigation sur un poteau indicateur et/ou une icône de navigation sur un bâtiment à proximité de la route ;
dans lequel le repère de navigation comprend l'icône de navigation sur la route, ladite icône de navigation sur la route comprenant une ligne de navigation sur la route ; et
dans lequel les informations d'attributs comprennent une position établie et/ou une couleur et/ou une longueur et/ou une largeur.

10. Appareil selon la revendication 9, **caractérisé en ce que** le module de commande comprend :
un premier sous-module de commande (7021) conçu pour commander le véhicule gyroscopique afin qu'il se déplace le long de la ligne de navigation sur la route.

11. Appareil selon l'une quelconque des revendications 8 à 10, **caractérisé en ce que** le module de commande comprend :
un deuxième sous-module de commande (7022) conçu pour commander le repère de navigation afin qu'il soit présent sur l'image de route obtenue par le troisième sous-module d'obtention.

12. Appareil selon l'une quelconque des revendications 7 à 11, **caractérisé en ce que** le module de commande comprend :
un quatrième sous-module d'obtention (7023) conçu pour obtenir une instruction de déplacement en fonction du repère de navigation détecté par le module de détection ; et
un troisième sous-module de commande (7024) conçu pour commander le véhicule gyroscopique afin qu'il se déplace en fonction de l'instruction de déplacement obtenue par le quatrième sous-module d'obtention.

13. Programme informatique qui, lorsqu'il s'exécute sur un processeur, met en œuvre un procédé selon l'une quelconque des revendications 1 à 6.
